# EUROPÄISCHE PATENTSCHRIFT

(11) **EP 2 134 228 B1**
(45) Veröffentlichungstag und Bekanntmachung des Hinweises auf die Patenterteilung: **13.04.2016**
(21) Anmeldenummer: 08707566.9
(22) Anmeldetag: 06.02.2008
(51) Int. Cl.: B62B 5/00, A47L 13/512

(54) **BEFESTIGUNGSELEMENT**
FASTENING ELEMENT
ÉLÉMENT DE FIXATION

(30) Priorität: 08.02.2007 DE 102007007033
(43) Veröffentlichungstag der Anmeldung: 23.12.2009
(73) Patentinhaber: Carl Freudenberg KG, 69469 Weinheim (DE)
(72) Erfinder: LINDNER, Falk, 69502 Hemsbach (DE); DEERBERG, Jens, 45130 Essen (DE)
(86) Internationale Anmeldenummer: PCT/EP2008/000898
(87) Internationale Veröffentlichungsnummer: WO 2008/095684

(56) Entgegenhaltungen:
- EP-A- 0 816 202
- DE-B3-102005 004 134
- DE-B3-102005 044 983
- DE-B3-102005 044 984
- DE-C1- 10 003 138
- DE-U1- 9 105 003
- DE-U1- 20 303 477
- FR-A- 1 049 697
- US-A- 4 743 040
- US-A1- 2003 178 383
- US-A1- 2004 251 227

## Beschreibung

### Technisches Gebiet

Die Erfindung betrifft ein Befestigungselement zum Befestigen von Reinigungsutensilien an einem Reinigungswagen mit Tragrohren mit ungleichem Höhen-Breitenverhältnis.

### Stand der Technik

Zum Transport von Reinigungsutensilien wie Wischgeräten, Besen, Wischeirnem, Müllsäcken werden im professionellen Reinigungsgewerbe meist Reinigungswagen eingesetzt. Diese sollen einen möglichst flexiblen Aufbau haben, um den Reinigungswagen den Anforderungen entsprechend mit verschiedenen Reinigungsutensilien ausstatten zu können. Dazu weist der Reinigungswagen ein möglichst einfaches Grundgerüst aus Rohren auf, an denen mit Befestigungselementen die Reinigungsgeräte befestigt werden können. Diese Befestigungselemente sollen möglichst flexibel an verschiedenen Stellen und in verschiedenen Ausrichtungen befestigbar sein. Dabei müssen die Befestigungselemente so ausgebildet sein, dass von Ihnen keine Verletzungsgefahr, beispielsweise durch vorstehende, scharfkantige Teile ausgeht.

Die Druckschrift EP 0 816 202 offenbart eine Werkzeughaltevorrichtung zum Anbringen an einem Schubkarren mit mindestens zwei identischen Befestigungselementen, die an einer Seite des Schubkarrens anbringbar sind. Die Befestigungselemente weisen jeweils einen Halteabschnitt und mehrere Aufnahmeelemente auf. Die Aufnahmeelemente weisen jeweils ein Innenmaß auf, das größer ist als eine Öffnung der Aufnahmeelemente.

Aus der Druckschrift US 4,743,040 ist ein Reinigungswagen offenbart, der ein Befestigungselement zum Befestigen von Reinigungsutensilien aufweist. Das Befestigungselement ist in dem Reinigungswagen integriert und weist Aufnahmeelemente auf, die zum Anbringen von Reinigungsutensilien ausgebildet sind.

Die US2004/0251227 A1 beschreibt ein platzsparendes Aufbewahrungssystem für Arbeitsräume. Die FR 1 049 697 zeigt ein Befestigungselement zum Befestigen von Werkzeug oder anderen Ausstellungs- und Verkaufsgegenständen.

### Darstellung der Erfindung

Der Erfindung liegt die Aufgabe zugrunde, ein Befestigungselement für einen Reinigungswagen bereit zu stellen, welches flexibel an einem Reinigungswagen befestigbar ist und die Befestigung von Reinigungsutensilien in verschiedene Ausrichtungen erlaubt.

Diese Aufgabe wird mit den Merkmalen von Anspruch 1 gelöst. Auf vorteilhafte Ausgestaltungen nehmen die Unteransprüche Bezug.

Zur Lösung der Aufgabe wird ein Befestigungselement zum Befestigen von Reinigungsutensilien an einem Reinigungswagen mit Tragrohren mit ungleichem Höhen-Breitenverhältnis vorgeschlagen, welches einen Halteabschnitt zur Befestigung des Befestigungselementes sowie zumindest ein erstes und ein zweites Aufnahmeelement aufweist die so ausgestaltet sind, dass Reinigungsutensilien in zumindest zwei unterschiedlichen, vorzugsweise orthogonalen Ebenen anbringbar sind. Die Tragrohre der Reinigungswagen sind meist unterschiedlich ausgerüstet, so dass die Aufnahmeelemente in unterschiedliche Richtungen weisen können. Es ist beispielsweise denkbar, dass die Tragrohre flachoval ausgebildet und somit höher als breit sind. Diese flachovalen Tragrohre können in waagerechten Abschnitten wahlweise stehend oder liegend angeordnet sein. Des Weiteren müssen auch die Reinigungsutensilien je nach Ausgestaltung unterschiedlich ausgerichtet werden können. Durch die Aufnahmeelement deren Befestigungsebenen orthogonal zueinander stehen, gibt es zwei Möglichkeiten, die Reinigungsutensilien auszurichten. Die Aufnahmeelemente sind weitgehend in das Befestigungselement integriert, so dass es keine hervorstehenden Teile gibt. Das Befestigungselement wird vorzugsweise einstückig und materialeinheitlich im Spritzgießverfahren hergestellt und besteht aus einem Kunststoff, beispielsweise Polyamid.

Das erste Aufnahmeelement kann so ausgestaltet sein, dass Reinigungsutensilien in zwei unterschiedlichen, vorzugsweise orthogonalen Ebenen anbringbar sind. Dadurch ergeben sich insgesamt drei verschiedene Möglichkeiten, die Reinigungsutensilien auszurichten und damit eine besonders große Flexibilität der Befestigung von Reinigungsutensilien.

Das erste Aufnahmeelement ist stumpfförmig mit Hinterschnitt, vorzugsweise kegelstumpfförmig oder pyramidenstumpfförmig ausgebildet sein, wobei die kleinere Stirnfläche dem Halteabschnitt zugewandt ist Durch diese Ausgestaltung ergibt sich ein umlaufender Hinterschnitt und auf zwei gegenüber liegenden Seiten jeweils eine Schwalbenschwanzverbindung. Dadurch können kongruent ausgebildete Gegenstände, beispielsweise ein Mophalter in zwei senkrecht zueinander stehenden Ausrichtungen befestigt werden. Diese Ausführung weist keine hervorstehenden Teile auf. Bei einem kegelstumpfförmigen Halteabschnitt kann das Reinigungsutensil drehbar befestigt werden. Bei einem pyramidenstumpfförmigen Halteabschnitt kann das Reinigungsutensil drehfest befestigt werden. Es sind auch weitere Profile, denkbar durch die sich ein Hinterschnitt bildet, durch den die Reinigungsutensilien befestigt werden. Denkbar sind beispielsweise L-Profile und T-Profile.

Das zweite Aufnahmeelement kann durch eine Wand gebildet sein, die senkrecht zu der kleineren Stirnfläche ausgerichtet ist, wobei die Wand, im Querschnitt betrachtet, zumindest abschnittsweise trapezförmig ausgebildet ist. Durch die trapezförmige Ausgestaltung ergibt sich ebenfalls ein Schwalbenschwanzprofil, wobei dieses Schwalbenschwanzprofil senkrecht auf den beiden anderen, durch den Pyramidenstumpf gebildeten, Schwalbenschwanzprofilen steht. Dieses Profil ist ebenfalls dadurch gekennzeichnet, dass es keine hervorstehenden Teile aufweist. Auch hier sind weitere Profile mit Hinterschnitt denkbar, beispielsweise eine L- oder T-Kontur. Es ist auch denkbar, die Profile des ersten Aufnahmeelementes und des zweiten Aufnahmeelementes unterschiedlich in Form oder Dimension zu gestalten, so dass jedes Aufnahmeelement beispielsweise einem bestimmten Reinigungsutensil zugeordnet werden kann.

Der Halteabschnitt kann als Schnapphaken ausgebildet sein. Ein Schnapphaken ist ein einfach und sicher zu befestigendes und einfach zu lösendes Befestigungsmittel. Der Schnapphaken ist hier derart ausgebildet, dass sich das Befestigungselement in der Hauptbelastungsrichtung nicht selbständig lösen kann. In anderen Ausgestaltungen ist auch denkbar, dass der Halteabschnitt mehrteilig ausgebildet ist oder schwenkbare Abschnitte aufweist, wobei die Teile durch Schraubverbindungen oder durch eine Kombination aus Filmscharnier und Schnapphaken miteinander verbunden werden, nachdem sie an dem Tragrohr angeordnet wurden.

Der Halteabschnitt kann eine Öffnung, die Wand sowie zwei an die Wand abgrenzende bogenförmige Abschnitte aufweisen. Dabei umfasst ein bogenförmiger Abschnitt einen größeren Kreisbogen, so dass ein selbständiges Lösen des Befestigungselements unter Belastung, also wenn Reinigungsutensilien an einem der Aufnahmeelemente befestigt sind, nicht möglich ist.

Die einander zugewandten Flächen der Wand sowie der Abschnitte können ausgerüstet sein, um den Reibschluss des Halteabschnitts zu verstärken und/oder durch einen Formschluss zu ergänzen. Dazu können diese Flächen mit einem Werkstoff hoher Reibung, insbesondere Gummi oder Silikon, beschichtet sein. Die Beschichtung verhindert ein ungewolltes seitliches Verschieben des Befestigungselementes. In einer anderen Ausgestaltung kann an zumindest einer der einander zugewandten Flächen eine Erhebung angeordnet sein, die in eine Sicke des Tragrohres des Reinigungswagens einrasten kann, so dass sich ein Formschluss ergibt.

Die größere Stirnfläche des ersten Aufnahmeelementes und/oder die Wand kann auf der der Öffnung abgewandten Seite ein Rastelement aufweisen. Das Rastelement sichert zusätzlich die an einem der Aufnahmeelemente befestigen Reinigungsutensilien und verhindert ein selbständiges Lösen.

Das Rastelement kann durch eine Erhebung gebildet sein. Die Erhebung kann als Kugelsegment ausgebildet sein und einstückig und materialeinheitlich an das Befestigungselement angeformt sein. In den entsprechenden Befestigungsabschnitten der Reinigungsutensilien können sich kongruente Ausnehmungen befinden in die die Erhebung einrastet. In einer anderen Ausgestaltung kann die Erhebung durch eine federbelastete Kugel, beispielsweise einer Kugel aus Metall gebildet sein. Derartige Ausgestaltungen sind besonders komfortabel zu bedienen und bieten eine hohe Betriebssicherheit.

Des Weiteren umfasst die Erfindung einen Mophalter zur Aufnahme eines Stiels oder einer Wischplatte eines Reinigungsgerätes, wobei der Mophalter einen Befestigungsabschnitt aufweist, um an dem ersten oder dem zweiten Aufnahmeelement befestigt zu werden. Der Befestigungsabschnitt des Mophalters ist kongruent zu den Aufnahmeabschnitten ausgebildet. Die Einheit bestehend aus Mophalter und Befestigungselement ermöglicht eine flexible, robuste und einfache Befestigung des Mophalters an einem Reinigungswagen.

### Kurzbeschreibung der Zeichnung

Einige Ausführungsbeispiele des erfindungsgemäßen Befestigungselementes werden nachfolgend anhand der Figuren näher erläutert. Diese zeigen, jeweils schematisch:
Fig. 1 das Befestigungselement in perspektivischer Darstellung;
Fig. 2 das Befestigungselement in der Seitenansicht;
Fig. 3 das Befestigungselement in einer weiteren perspektivischer Darstellung;
Fig. 4 einen Mophalter geeignet zur Aufnahme einer Wischplatte;
Fig. 5 einen Mophalter geeignet zur Aufnahme eines Stiels;
Fig. 6 einen Reinigungswagen mit Befestigungselementen.

### Ausführung der Erfindung

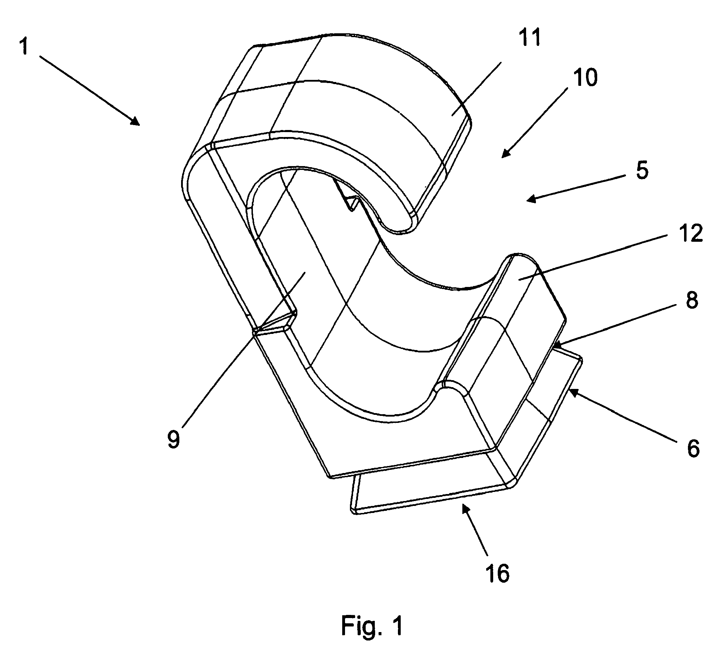

Figur 1 zeigt eine Befestigungselement 1 zum Befestigen von Reinigungsutensilien 2 an einem Reinigungswagen 3 mit nichtrotationssymmetrischen Tragrohren 4. Das Befestigungselement ist einteilig und materialeinheitlich ausgebildet und besteht aus einem spritzgegossenen Kunststoff, hier Polyamid. Zur Befestigung an den Tragrohren 4 weist es einen Halteabschnitt 5 auf der als Schnapphaken ausgebildet ist. Des Weiteren weist das Befestigungselement 1 ein erstes und ein zweites Aufnahmeelement 6, 7 auf. Das erste Aufnahmeelement 6 ist pyramidenstumpfförmig ausgebildet, wobei die kleinere Stirnfläche 8 des Pyramidenstumpfes dem Halteabschnitt 5 zugewandt ist. Dadurch ergibt sich auf zwei gegenüber liegenden Seiten jeweils eine Schwalbenschwanzverbindung, so dass Reinigungsutensilien 2 in zwei orthogonalen Ebenen anbringbar sind. Das zweite Aufnahmeelement 7 ist durch eine Wand 9 gebildet, die senkrecht zu der kleineren Stirnfläche 8 des ersten Aufnahmeelementes 6 ausgerichtet ist. Die Wand 9 ist abschnittsweise trapezförmig ausgebildet, wodurch sich ein weiteres Schwalbenschwanzprofil ergibt. Dadurch ergibt sich eine Aufnahmemöglichkeit für Reinigungsutensilien 2 in einer weiteren Ebene und damit in allen drei Raumrichtungen. Die Aufnahmeelemente 6, 7 weisen identische Profile auf, so dass die Reinigungsutensilien 2 wahlweise auf beiden Aufnahmeelementen 6, 7 befestigt werden können. Der Halteabschnitt 5 ist durch eine Öffnung 10, die Wand 9 sowie zwei an die Wand abgrenzende bogenförmige Abschnitte 11, 12 gebildet, wobei der dem ersten Aufnahmeelement 6 abgewandte Abschnitt 11 einen größeren Kreisbogen umfasst als der andere Abschnitt 12.

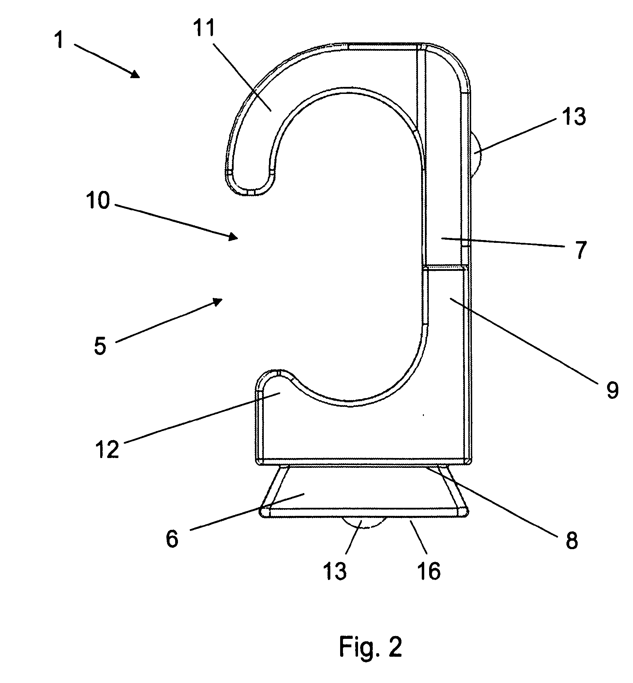

Figur 2 zeigt ein Befestigungselement 1 gemäß Figur 1, wobei die einander zugewandten Flächen der Wand 9 sowie der Abschnitte 11, 12 in dieser Ausführung mit einem Werkstoff hoher Reibung, hier Gummi beschichtet sind. Des Weiteren weisen die größere Stirnfläche 16 des ersten Aufnahmeelementes 6 und die Wand 9 auf der der Öffnung abgewandten Seite jeweils ein Rastelement 13 in Form einer einstückig angeformten Erhebung auf.

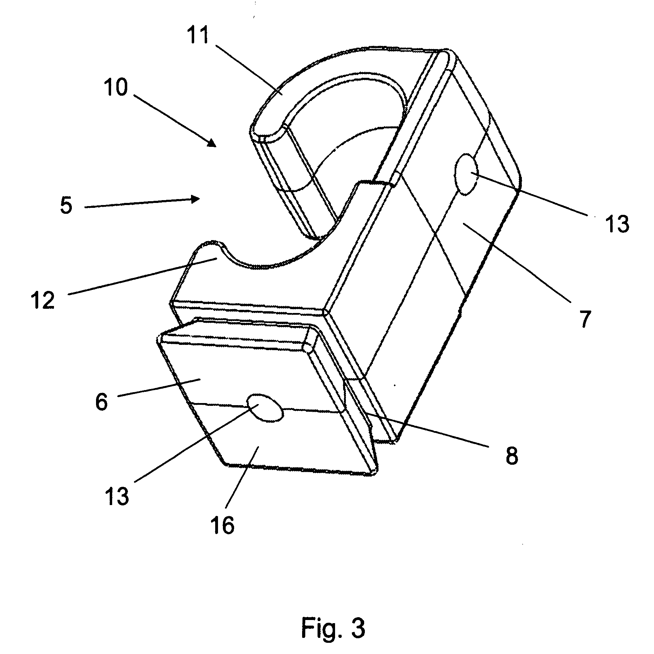

Figur 3 zeigt ein Befestigungselement gemäß Figur 1, wobei die größere Stirnfläche 16 des ersten Aufnahmeelementes 6 und die Wand 9 auf der der Öffnung abgewandten Seite jeweils ein Rastelement 13 in Form einer einstückig angeformten Erhebung aufweisen.

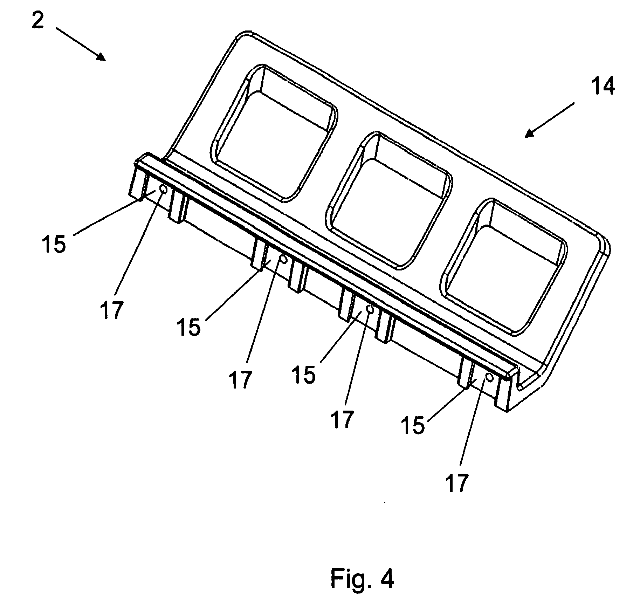

Figur 4 zeigt ein Reinigungsutensil 2 in Form eines Mophalters 14. Der Mophalter 14 ist zur Aufnahme einer Wischplatte eines Reinigungsgerätes geeignet. Der Mophalter 14 weist vier Befestigungsabschnitte 15 auf, die mit dem ersten oder dem zweiten Aufnahmeelement 6, 7 eines Befestigungselementes 1 gemäß Figur 1 verbunden werden können. Die Befestigungsabschnitte 15 weisen jeweils eine Ausnehmung 17 auf, in die das Rastelement 13 einrasten kann.

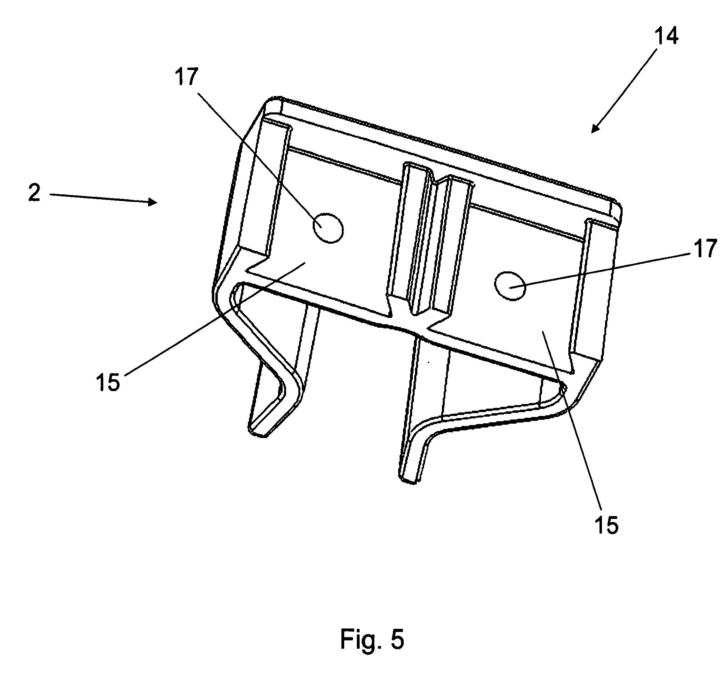

Figur 5 zeigt ein Reinigungsutensil 2 in Form eines weiteren Mophalters 14. Der Mophalter 14 ist zur Aufnahme eines Stiels eines Reinigungsgerätes geeignet. Der Mophalter 14 weist zwei Befestigungsabschnitte 15 auf, die mit dem ersten oder dem zweiten Aufnahmeelement 6, 7 eines Befestigungselementes 1 gemäß Figur 1 verbunden werden können. Die Befestigungsabschnitte 15 weisen jeweils eine Ausnehmung 17 auf, in die das Rastelement 13 einrasten kann.

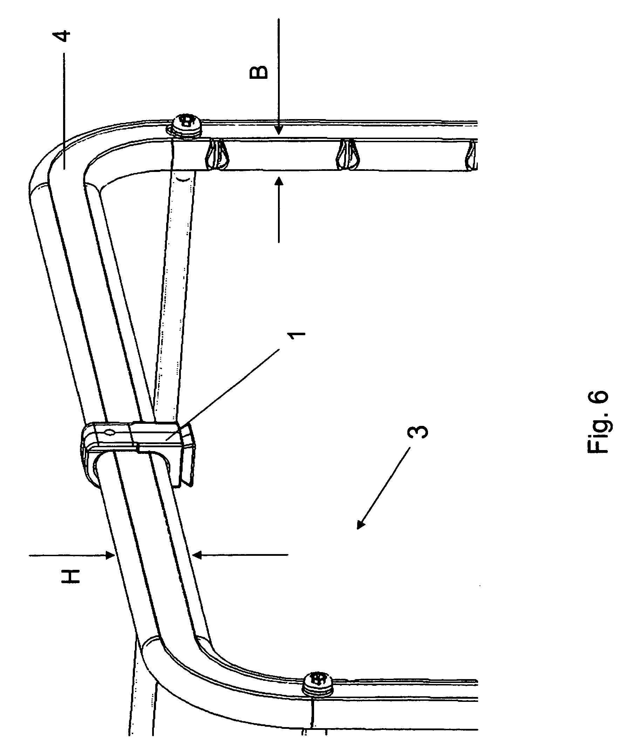

Figur 6 zeigt einen Ausschnitt eines Reinigungswagens 3 mit einer Tragkonstruktion aus metallischen Tragrohren 4 mit einem ungleichen Höhen-Breitenverhältnis H, B. In dieser Ausgestaltung sind die Tragrohre 4 flachoval ausgebildet. Auf das Tragrohr 4 ist ein Befestigungselement 1 aufgeklipst auf welches wiederum Reinigungsutensilien 2 aufgesteckt werden können.

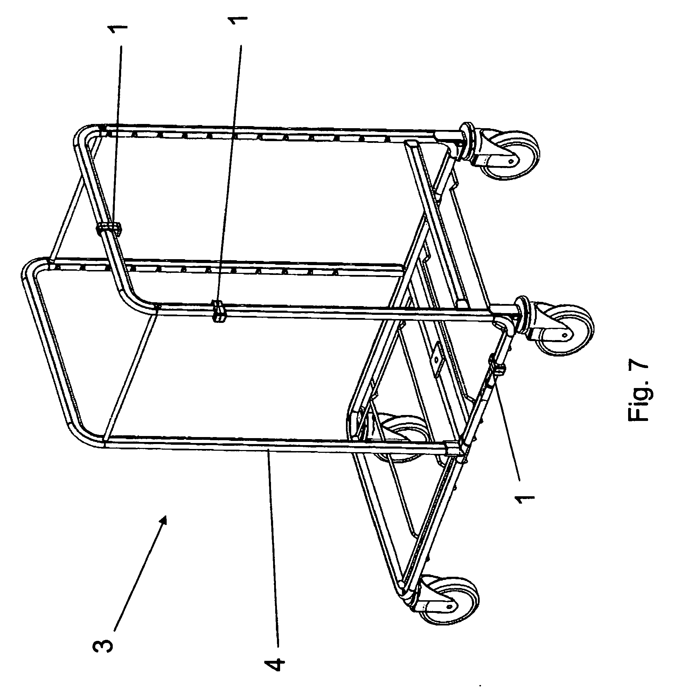

Figur 7 zeigt einen Reinigungswagen 3 mit einer Tragkonstruktion aus Tragrohren 4 gemäß Figur 6. Die Tragrohre 4 sind dabei so angeordnet, dass sie im unteren Abschnitt liegend und im oberen Abschnitt stehend angeordnet sind. Das Befestigungselement 1, welches im oberen Abschnitt auf das Tragrohr 4 aufgeklipst ist, ist dabei so ausgerichtet, dass ein Reinigungsutensil 2 auf das zweite Aufnahmeelement 7 aufgesteckt werden kann. Die Befestigungselemente 1, die an senkrecht verlaufenden Tragrohren 4 und den Tragrohren 4 im unteren Abschnitt des Reinigungswagens 3 aufgeklipst sind, sind so ausgerichtet, dass ein Reinigungsutensil auf das erste Aufnahmeelement 6 aufgesteckt werden kann. Hier können Reinigungsutensilien 2 in zwei senkrecht aufeinander stehenden Ebenen auf das erste Aufnahmeelement 6 aufgesteckt werden. In allen Fällen ist gewährleistet, dass keine scharfkantigen Gegenstände herausstehen.

## Patentansprüche

1. Befestigungselement (1) zum Befestigen von Reinigungsutensilien (2) an einem Reinigungswagen (3) mit Tragrohren (4) mit ungleichem Höhen-Breitenverhältnis aufweisend einen Halteabschnitt (5) zur Befestigung des Befestigungselementes (1) sowie zumindest ein erstes und ein zweites Aufnahmeelement (6, 7), die so ausgestaltet sind, dass Reinigungsutensilien (2) in zumindest zwei unterschiedlichen Ebenen anbringbar sind,
**dadurch gekennzeichnet, dass**
das erste Aufnahmeelement (6) stumpfförmig mit Hinterschnitt, vorzugsweise kegelstumpfförmig oder pyramidenstumpfförmig, ausgebildet ist, wobei eine kleinere Stirnfläche (8) dem Halteabschnitt (5) zugewandt ist.

2. Befestigungselement nach Anspruch 1, **dadurch gekennzeichnet, dass** die Reinigungsutensilien (2) in zumindest zwei orthogonalen Ebenen anbringbar sind.

3. Befestigungselement nach Anspruch 1 oder 2, **dadurch gekennzeichnet, dass** das erste Aufnahmeelement (6) so ausgestaltet ist, dass Reinigungsutensilien (2) in zwei unterschiedlichen Ebenen anbringbar sind.

4. Befestigungselement nach Anspruch 3, **dadurch gekennzeichnet, dass** das erste Aufnahmeelement (6) so ausgestaltet ist, dass Reinigungsutensilien (2) in zwei orthogonalen Ebenen anbringbar sind.

5. Befestigungselement nach einem der Ansprüche 1 bis 4, **dadurch gekennzeichnet, dass** das zweite Aufnahmeelement (7) durch eine Wand (9) gebildet ist, die senkrecht zu der kleineren Stirnfläche (8) ausgerichtet ist und dass die Wand (9), im Querschnitt betrachtet, zumindest abschnittsweise trapezförmig ausgebildet ist.

6. Befestigungselement nach einem der Ansprüche 1 bis 5, **dadurch gekennzeichnet, dass** der Halteabschnitt (5) als Schnapphaken ausgebildet ist.

7. Befestigungselement nach Anspruch 6, **dadurch gekennzeichnet, dass** der Halteabschnitt (5) eine Öffnung (10), die Wand (9) sowie zwei an die Wand angrenzende bogenförmige Abschnitte (11, 12) aufweist.

8. Befestigungselement nach Anspruch 6 oder 7, **dadurch gekennzeichnet, dass** die einander zugewandten Flächen der Wand (9) sowie der Abschnitte (11, 12) ausgerüstet sind, um den Reibschluss des Halteabschnitts (5) zu verstärken und/oder durch einen Formschluss zu ergänzen.

9. Befestigungselement nach Anspruch 8, **dadurch gekennzeichnet, dass** die einander zugewandten Flächen der Wand (9) sowie der Abschnitte (11, 12) mit einem Werkstoff hoher Reibung, insbesondere Gummi oder Silikon beschichtet sind.

10. Befestigungselement nach einem der Ansprüche 1 bis 9, **dadurch gekennzeichnet, dass** die grössere Stirnfläche (16) des ersten Aufnahmeelementes (6) und/oder die Wand (9) auf der der Öffnung abgewandten Seite ein Rastelement (13) aufweist.

11. Befestigungselement nach Anspruch 10, **dadurch gekennzeichnet, dass** das Rastelement (13) durch eine Erhebung gebildet ist.

12. Mophalter (14) zur Aufnahme eines Stiels oder einer Wischplatte eines Reinigungsgerätes,
wobei der Mophalter (14) zumindest einen Befestigungsabschnitt (15) aufweist,
wobei der Mophalter (14) an dem ersten oder dem zweiten Aufnahmeelement (6, 7) eines Befestigungselementes (1) nach einem der vorherigen Ansprüche befestigt ist.

## Claims

1. Fastening element (1) for fastening cleaning utensils (2) on a cleaning cart (3) with load-bearing tubes (4) of unequal height/width ratios, having a retaining portion (5) for fastening the fastening element (1) and having at least a first and a second accommodating element (6, 7), these being configured such that cleaning utensils (2) can be fitted in at least two different planes,
**characterized in that**
the first accommodating element (6) is designed in the form of a frustum with an undercut, preferably in the form of a frustum of a cone or pyramid, wherein a smaller end surface (8) is directed towards the retaining portion (5).

2. Fastening element according to Claim 1, **characterized in that** the cleaning utensils (2) can be fitted in at least two orthogonal planes.

3. Fastening element according to Claim 1 or 2, **characterized in that** the first accommodating element (6) is configured such that cleaning utensils (2) can be fitted in two different planes.

4. Fastening element according to Claim 3, **characterized in that** the first accommodating element (6) is configured such that cleaning utensils (2) can be fitted in two orthogonal planes.

5. Fastening element according to one of Claims 1 to 4, **characterized in that** the second accommodating element (7) is formed by a wall (9) which is oriented perpendicularly to the smaller end surface (8), and **in that** the wall (9), as seen in cross section, is of at least partially trapezoidal design.

6. Fastening element according to one of Claims 1 to 5, **characterized in that** the retaining portion (5) is designed in the form of a snap-fit hook.

7. Fastening element according to Claim 6, **characterized in that** the retaining portion (5) has an opening (10), the wall (9) and two arcuate portions (11, 12) adjoining the wall.

8. Fastening element according to Claim 6 or 7, **characterized in that** the mutually facing surfaces of the wall (9) and of the portions (11, 12) are configured to enhance the friction fit of the retaining portion (5) and/or to supplement the same by a form fit.

9. Fastening element according to Claim 8, **characterized in that** the mutually facing surfaces of the wall (9) and of the portions (11, 12) are coated with a material with a high level of friction, in particular rubber or silicone.

10. Fastening element according to one of Claims 1 to 9, **characterized in that** the larger end surface (16) of the first accommodating element (6) and/or the wall (9), on the side directed away from the opening, have/has a latching element (13).

11. Fastening element according to Claim 10, **characterized in that** the latching element (13) is formed by an elevation.

12. Mop holder (14) for accommodating a handle or a mop-head plate of a cleaning implement,
wherein the mop holder (14) has at least one fastening portion (15), and wherein the mop holder (14) is fastened on the first or the second accommodating element (6, 7) of a fastening element (1) according to one of the preceding claims.

## Revendications

1. Élément de fixation (1) pour la fixation d'ustensiles de nettoyage (2) à un chariot de nettoyage (3) avec des tubes porteurs (4) ayant un rapport hauteur-largeur différent présentant une portion de retenue (5) pour la fixation de l'élément de fixation (1) ainsi qu'au moins un premier et un deuxième élément de réception (6, 7) qui sont configurés de telle sorte que des ustensiles de nettoyage (2) puissent être montés dans au moins deux plans différents,
**caractérisé en ce que** le premier élément de réception (6) est réalisé sous forme de tronc avec une contre-dépouille, de préférence sous forme de tronc de cône ou sous forme de tronc de pyramide, une surface frontale plus petite (8) étant tournée vers la portion de retenue (5).

2. Élément de fixation selon la revendication 1,
**caractérisé en ce que** les ustensiles de nettoyage (2) peuvent être montés dans au moins deux plans perpendiculaires.

3. Élément de fixation selon la revendication 1 ou 2,
**caractérisé en ce que** le premier élément de réception (6) est configuré de telle sorte que des ustensiles de nettoyage (2) puissent être montés dans deux plans différents.

4. Élément de fixation selon la revendication 3,
**caractérisé en ce que** le premier élément de réception (6) est configuré de telle sorte que des éléments de nettoyage (2) puissent être montés dans deux plans perpendiculaires.

5. Élément de fixation selon l'une quelconque des revendications 1 à 4, **caractérisé en ce que** le deuxième élément de réception (7) est formé par une paroi (9) qui est orientée perpendiculairement à la plus petite surface frontale (8) et **en ce que** la paroi (9), considérée en section transversale, est réalisée au moins en partie sous forme trapézoïdale.

6. Élément de fixation selon l'une quelconque des revendications 1 à 5, **caractérisé en ce que** la portion de retenue (5) est réalisée sous forme de crochet d'encliquetage.

7. Élément de fixation selon la revendication 6,
**caractérisé en ce que** la portion de retenue (5) présente une ouverture (10), la paroi (9) ainsi que deux portions (11, 12) de forme courbe adjacentes à la paroi.

8. Élément de fixation selon la revendication 6 ou 7,
**caractérisé en ce que** les surfaces tournées l'une vers l'autre de la paroi (9) ainsi que des portions (11, 12) sont équipées afin de renforcer l'engagement par friction de la portion de retenue (5) et/ou de le compléter par un engagement par correspondance de formes.

9. Élément de fixation selon la revendication 8,
**caractérisé en ce que** les surfaces tournées l'une vers l'autre de la paroi (9) ainsi que des portions (11, 12) sont revêtues d'un matériau de grande friction, en particulier de caoutchouc ou de silicone.

10. Élément de fixation selon l'une quelconque des revendications 1 à 9, **caractérisé en ce que** la plus grande surface frontale (16) du premier élément de réception (6) et/ou la paroi (9) présentent, sur le côté opposé à l'ouverture, un élément d'encliquetage (13).

11. Élément de fixation selon la revendication 10,
**caractérisé en ce que** l'élément d'encliquetage (13) est formé par un rehaussement.

12. Dispositif de fixation de balai (14) pour recevoir un manche ou une plaque de nettoyage d'un appareil de nettoyage,
le dispositif de fixation de balai (14) présentant au moins une portion de fixation (15), le dispositif de fixation de balai (14) étant fixé au premier ou au deuxième élément de réception (6, 7) d'un élément de fixation (1) selon l'une quelconque des revendications précédentes.
